# EUROPEAN PATENT SPECIFICATION

(11) **EP 2 812 698 B1**
(45) Date of publication and mention of the grant of the patent: **28.10.2020**
(21) Application number: 13747045.6
(22) Date of filing: 06.02.2013
(51) Int. Cl.: G01N 21/64

(54) **DUAL-ACCEPTOR TIME-RESOLVED-FRET**
ZEITAUFGELÖSTES FRET MIT DOPPELTEM AKZEPTOR
FRET À RÉSOLUTION TEMPORELLE ET ACCEPTEUR DOUBLE

(30) Priority: 06.02.2012 US 201261595459 P
(43) Date of publication of application: 17.12.2014
(73) Proprietor: PerkinElmer Health Sciences Canada, Inc., Woodbridge, Ontario L4L 8H1 (CA)
(72) Inventor: ROBY, Philippe, Montreal Quebec H3C 0G3 (CA); POUNDER, Brittany, LaSalle Quebec H8N 1J5 (CA); DAHAN, Sophie, Pierrefonds Quebec H8Z 2V3 (CA)
(74) Representative: Williams, Gareth Owen
(86) International application number: PCT/CA2013/000107
(87) International publication number: WO 2013/116931

(56) References cited:
- WO-A1-2006/042912
- US-A1- 2004 229 284
- US-A1- 2006 240 571
- US-A1- 2008 261 239
- US-B2- 7 846 658
- TIINA KOKKO ET AL: "Terbium(III) Chelate as an Efficient Donor for Multiple-Wavelength Fluorescent Acceptors", JOURNAL OF FLUORESCENCE, KLUWER ACADEMIC PUBLISHERS-PLENUM PUBLISHERS, NE, vol. 19, no. 1, 19 July 2008 (2008-07-19), pages 159-164, XP019680997, ISSN: 1573-4994
- Tiina Kokko: "Lanthanide Chelates as Donors in Fluorescence Resonance Energy Transfer: Exciting Prospects for Bioaffinity Assay Detection", PhD Dissertation, 2009, pages 1-68, XP055207053, Retrieved from the Internet: URL:https://www.doria.fi/bitstream/handle/ 10024/45410/AnnalesAI398 Kokko.pdf?sequence=1 [retrieved on 2015-08-10]
- HEMMILÄ I ET AL: "Progress in Lanthanides as Luminescent Probes", JOURNAL OF FLUORESCENCE, KLUWER ACADEMIC PUBLISHERS-PLENUM PUBLISHERS, NE, vol. 15, no. 4, 1 July 2005 (2005-07-01), pages 529-542, XP019281715, ISSN: 1573-4994
- HORTON ET AL.: 'Multiplexing terbium- and europium-based TR-FRET readouts to increase kinase assay capacity' JOURNAL OF BIONZOLECZRLAR SCREEZZIZZG vol. 15, no. 8, 2010, pages 1008 - 1015, XP055159613
- KOL:HO ET AL.: 'Homogeneous dual-parameter assay for prostate-specific antigen based on fluorescence resonance energy transfer' ANALYTICAL CHEMISTRY vol. 80, no. 24, 2008, pages 9763 - 9768, XP055159616
- KUPCHO ET AL.: 'Simultaneous monitoring of discrete binding events using dual-acceptor terbium-based LRET:.' JOURNAL OF TLZE AMERICARZ CHEMICAL SOCIETY vol. 129, pages 13372 - 13373, XP055159618
- POUNDER, B. ET AL.: 'Multiplexing in LANCE TR-FRET assavs' SOCIETY FOR LABORATOZY. AUTOMATION & SCREENING 06 February 2012, SAN DIEGO, CA, XP008174488

## Description

### TECHNICAL FIELD

The present disclosure relates to multiplex assays for determining the presence or absence of two or more analytes in a sample with time-resolved fluorescence resonance energy transfer.

### BACKGROUND

Time-resolved fluorescence resonance energy transfer (TR-FRET) applications are based on energy transfer between a donor and an acceptor molecule. FRET is a non-radiative energy transfer from a fluorescent donor molecule to an appropriate acceptor molecule. When a donor molecule is excited by a light source, it produces fluorescence. If an acceptor molecule is in close proximity, and the emission spectrum of the donor molecule overlaps with the excitation spectrum of the acceptor molecule, the donor molecule, instead of emitting fluorescent light, can transfer its excitation energy to the acceptor molecule. The acceptor molecule will then emit fluorescence at the acceptor emission wavelength. The apparition of fluorescent light at the acceptor emission wavelength indicates that the donor and acceptor molecules are in close proximity to each other as the donor and acceptor molecules need to be less than about 20 nm apart for energy transfer to occur, e.g., 5-10 nm apart. Typically, close proximity between the donor and acceptor molecules is achieved via bioaffinity interactions, e.g., protein-protein binding, antigen-antibody binding, ligand-receptor binding, DNA hybridization, and DNA-protein binding.

A large variety of donor and acceptor molecules exist. Typically the donor and acceptor molecules used in FRET assays are fluorophores that have short half-lives. The performance of traditional FRET chemistries can be reduced by background fluorescence from sample components such as buffers, proteins, chemical compounds, and cell lysate. Detected fluorescence intensities must be corrected for this auto-fluorescence, which reduces assay sensitivity and can complicate result interpretation. This type of background fluorescence is transient (with a lifetime in the nanosecond range) and can therefore be eliminated using time-resolved methodologies.

TR-FRET takes advantage of the unique properties of lanthanide ions such as europium (Eu), terbium (Tb), samarium (Sm), and dysprosium (Dy) ions. Because of their specific photophysical and spectral properties, complexes of rare earth ions are of interest for fluorescence applications in biology. Specifically, they have large Stoke's shifts and long emission half-lives (from µsec to msec) when compared to more traditional fluorophores.

It is difficult to generate fluorescence of lanthanide ions by direct excitation, because of the ions' poor ability to absorb light. Lanthanides must first be complexed with organic moieties that harvest light and transfer it to the lanthanide through intramolecular, non-radiative processes. Rare earth chelates and cryptates are examples of light-harvesting moieties. The collected energy is transferred to the rare earth ion, which then emits its characteristic long-lived fluorescence. Lanthanide chelates usually also have high quantum yields, allowing for low amounts of donor to generate a bright signal, thus increasing sensitivity. Further, their emission peaks are fairly narrow, allowing for little contamination of the acceptor emission light. One of the main metals used for the technology platform is europium (excitation at about 315-350 nm and emission at about 600-635 nm).

US 7,846,658 B2 relates to a method for improving the detection sensitivity in homogeneous TR FRET based bioaffinity assays, and in particular in multianalyte assays.

### SUMMARY

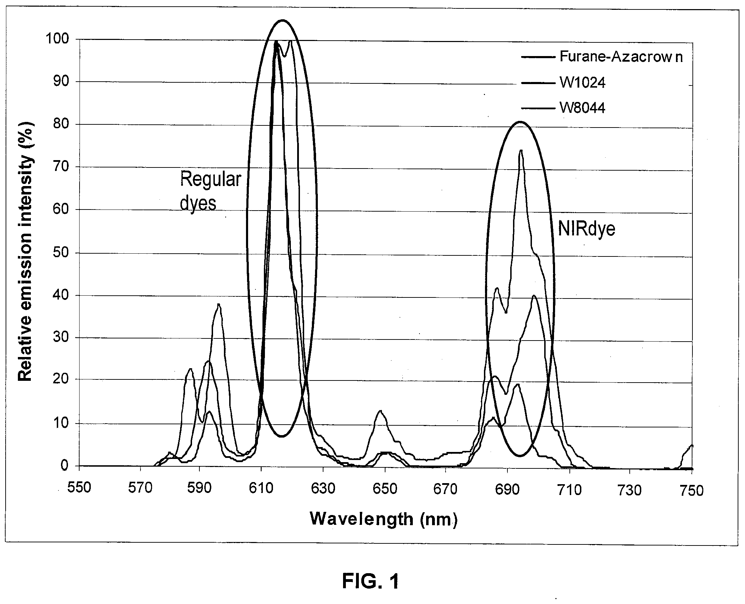

The present disclosure is based, at least in part, on a new approach to TR-FRET. Europium chelates emit energy at more than one wavelength. Neglecting small peaks, it has two main peaks of emission: one peak at about 600-635 nm and another at about 675-715 nm (**FIG. 1**). This observation raises the possibility of having two acceptor molecules present in TR-FRET assays, one that will interact with the 600-635 nm emission peak and one that will interact with the 675-715 nm emission peak. Thus, one lanthanide chelate donor allows for two simultaneous assays to detect two analytes or modifications in a sample.

In one aspect, methods of determining the presence or absence, independently, of two analytes in a sample are provided, as defined in claim 1. The methods include contacting the sample with a first analyte-specific binding partner bound to a first fluorescence energy resonance transfer (FRET) acceptor, a second analyte-specific binding partner bound to a second FRET acceptor, and a compound comprising a europium chelate moiety; exposing the sample to light in a wavelength range capable of exciting the europium in the chelate; and determining, independently, if the first analyte-specific binding partner and the second analyte-specific binding partner bind to the first analyte and second analyte, respectively, thereby detecting the presence or absence, independently, of the two analytes in the sample. The first and second analytes each comprise an affinity tag and the compound comprising a europium chelate moiety further comprises an affinity tag-specific binding partner. In one embodiment, the conjugated chelate moieties are the same in both binding partners. Any appropriate europium chelating moiety can be employed. In some embodiments, chelate moieties can be selected from the group consisting of pyridine, bipyridine, terpyridine, salicylate, coumarin derivatives, phenanthroline and pyrazole derivatives (Hemmilä et al., J Fluoresc 15:529-42, 2005).

The first and second analytes are each, independently, conjugated to a detection moiety, which is a FRET acceptor. According to the invention, one of the detection moieties is capable of being excited by light with a wavelength of about 600 to 635 nm (e.g., 600-610 nm, 605-615 nm, 610-620 nm, 615-625 nm, 620-635 nm, 625-635 nm), and the other is capable of being excited by light with a wavelength of about 675 to 715 nm (e.g., 675-685 nm, 685-695 nm, 690-700 nm, 695-705 nm, 690-710 nm, 700-710 nm, 700-715 nm, 705-715 nm).

According to the invention, the sample is exposed to light with a wavelength of about 315 to 350 nm (e.g., 315-320 nm, 315-325 nm, 320-330 nm, 325-335 nm, 330-340 nm, 320-340 nm, 325-340 nm, 330-340 nm, 325-345 nm, 330-345 nm, 335-345 nm, 340-350 nm).

In some embodiments, determining if the first analyte-specific binding partner binds to the first analyte comprises detecting an emission light with a wavelength of about 650 to 680 nm (e.g., 655-665 nm, 655-670 nm, 660-670 nm, 660-675 nm, 665-675 nm).

In some embodiments, determining if the second analyte-specific binding partner binds to the second analyte comprises detecting an emission light with a wavelength of about 715 to 750 nm (e.g., 715-725 nm, 715-730 nm, 720-730 nm, 720-735 nm, 725-735 nm, 725-740 nm, 730-740 nm).

The first and second analyte-specific binding partners each comprise an analyte binding molecule.

In some embodiments, the sample is opaque to visible light. In one embodiment, the sample comprises purified molecules, membranes, tissue extracts, blood (and blood derivatives including serum and plasma), cell lysates and cell culture supernatants, and other biological fluids (cerebrospinal fluid, urine).

### DESCRIPTION OF DRAWINGS

**FIG. 1** is a graph showing the emission spectra of europium chelates.
**FIG. 2** is a schematic diagram of an assay with two peptides labeled with different acceptor molecules (*ULight* and a NIR-dye).
**FIG. 3** is a schematic diagram of an assay with two antibodies, each labeled with a different acceptor molecule (U*Light* and a NIR-dye), and a targeted peptide.
**FIG. 4** is a schematic diagram of the principle behind multiplex TR-FRET assays.
**FIGs. 5A** and **5B** are line graphs depicting signal detection from a singleplex detection assay.
**FIG. 6** is a line graph depicting signal detection from a multiplex detection assay.
**FIGs. 7A** and **7B** are line graphs depicting signal detection from a multiplex detection assay with a single enzyme, enzyme titration.
**FIGs. 8A** and **8B** are line graphs depicting signal detection from a multiplex detection assay with a single enzyme, cofactor titration.
**FIG. 9** is a line graph depicting signal detection from a multiplex, two enzyme cofactor titration assay.
**FIGs. 10A** and **10B** are line graphs depicting signal detection from a multiplex detection assay with a single enzyme, inhibitor titration.
**FIG. 11** is a line graph depicting signal detection from a multiplex detection assay with two enzymes, inhibitor titration.
**FIG. 12** is a scatter plot depicting signal detection from a multiplex detection assay with two enzymes to determine Z' values.

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting.

### DETAILED DESCRIPTION

It can be technically challenging to measure multiple analytes in a sample with existing FRET technologies. To measure more than one analyte in a sample, one would normally need to use several pairs of donor and acceptor molecules. This creates a need for several excitation wavelengths, and potentially complex analysis, which can involve peak overlaps and crosstalk. Combining a single donor molecule that emits at two distinct emission peaks when excited at one wavelength with two acceptor molecules can allow detection of two analytes at once in a single sample, saving on complexity, reagents, and time.

Usually in TR-FRET, a lanthanide chelate (e.g., a chelate comprising a lanthanide ion, such as a europium, terbium, samarium, or dysprosium ion) is excited at about 315-350 nm, e.g., 320-340 nm, to generate light at about 600-635 nm, e.g., 610-620 nm. This energy can be transferred to an acceptor molecule in close proximity (e.g., 1-20 nm). The acceptor molecule will then fluoresce at wavelengths of about 655-675 nm, e.g., 660-670 nm.

Europium chelates excited at about 315-350 nm, e.g., 320-340 nm, also emit light at about 675-715 nm, e.g., 680-710 nm. By using acceptors molecules that absorb at about 675-715 nm, e.g., 680-710 nm, and emit at about 715-740 nm, e.g., 720-730 nm, a second color of emission can be generated while using a single chelate. This allows for two analytes to be measured in one sample, and also generates very penetrative light at about 715-740 nm that is able to be read in opaque samples, e.g., samples with purified molecules, membranes, tissue extracts, blood (and blood derivatives including serum and plasma), cell lysates and cell culture supernatants, and other biological fluids (e.g., cerebrospinal fluid, urine).

Performing TR-FRET in opaque media is complex, as the light emitted in regular TR-FRET does not penetrate through such matrixes. However, an emission light at about 715-740 nm, e.g., 720-730 nm, is highly penetrative at these wavelengths. Further, emission wavelengths greater than 675 nm (e.g., emission light at about 675-715 and about 715-740 nm) are rare in general compounds, thus reducing the risk of interference in an assay that takes advantage of the second major emission peak of lanthanide chelates (e.g., europium, terbium, samarium, and dysprosium). If interference is a concern, the second wavelength is a potential control in the assay.

### Fluorescence Resonance Energy Transfer

In some embodiments, the methods described herein use FRET-based homogenous assays for detection of two or more analytes. FRET-based assays are described in U.S. Patent No. 5,981,200. FRET requires at least two dye molecules: a first dye that serves as a FRET donor and a second dye that serves as a FRET acceptor. Typically, a FRET donor is an energy donor and a FRET acceptor is an energy acceptor. FRET is the energy transfer that takes place between the FRET donor and the FRET acceptor, as described in more detail below, and is the signal that is measured during a so-called FRET assay.

Fluorescent molecules having the proper emission and excitation spectra that are brought into close proximity with one another can exhibit FRET. This process occurs as follows: First, a FRET donor is excited, for example, using a picosecond laser pulse, and is converted, by absorption of energy in the form of a photon, from a ground state into an excited state. Second, the FRET donor emits this newly absorbed energy as fluorescent light. Third, if the excited donor molecule is close enough to a suitable acceptor molecule, the excited state can be transferred from the donor to the acceptor in the form of fluorescent light. This energy transfer is known as FRET. Fourth, FRET results in a decrease in the fluorescence or luminescence of the donor and, if the acceptor is itself luminescent, results in an increased luminescence of the acceptor. The light emitted by the acceptor can be measured using a FRET-detection system, and is proportional to the FRET. Thus, the information gathered can be used for qualitative and quantitative analysis. In some embodiments, the light emitted from the donor will be of a different wavelength than the light emitted from the acceptor.

The efficiency of FRET, i.e., the signal produced when energy is transferred from the donor to the acceptor dye is dependent on the distance (1/d) between the donor and acceptor dye and FRET only occurs efficiently when the donor and acceptor are very close together. The decrease in signal depends on the sixth power of the separation distance. Thus, FRET measures distance-dependent interactions. Measurements made using FRET are on the scale of about 1-20 nm.

Thus, as used herein, an interaction means a change in the distance between molecules that can be detected by FRET measurement. To detect this interaction, it is necessary that a FRET donor as well as a FRET acceptor are coupled to one or more molecules and that the interaction between the one or more molecules leads to a change in the distance between the FRET donor and the FRET acceptor.

In some embodiments, FRET may include, but is not limited to (A) the FRET donor and the FRET acceptor bound to different molecules in a binding pair; (B) the FRET donor and the FRET acceptor bound to different regions within a single molecule; and (C) the FRET donor and the FRET acceptor bound to two different molecules in a ternary complex. However, in (C), the two separate molecules that the FRET donor and the FRET acceptor are attached to must complex in such a way that efficient energy transfer can occur between the donor and the acceptor.

Thus, FRET can be manifested as (A) a reduction in the intensity of the fluorescent signal from the FRET donor; (B) a reduction in the lifetime of the excited state of the FRET donor; and/or (C) re-emission of fluorescent light typically at the longer wavelengths (lower energies) characteristic of the acceptor.

Energy acceptors can either be selected such that they suppress the energy released by the donor, which are referred to as quenchers, or the FRET acceptors can themselves release fluorescent energy, i.e., they fluoresce. Such energy acceptors are referred to as fluorophore groups or as fluorophores. Metallic complexes are suitable as fluorescence energy donors as well as fluorescence energy acceptors. Fluorophores chosen for use in FRET are generally bright and occur on a timescale ranging from 10⁻⁹ seconds to 10⁻⁴ seconds. Such brightness and timescale facilitate the detection of FRET and allow the use of a variety of detection methods.

The FRET donor and the FRET acceptor are chosen based on one or more, including all, of the following: (1) the emission spectrum of the FRET donor should overlap with the excitation spectrum of the FRET acceptor; (2) the emission spectra of the FRET partners (i.e., the FRET donor and the FRET acceptor) should show non-overlapping fluorescence; (3) the FRET quantum yield (i.e., the energy transferred from the FRET donor to the FRET acceptor) should be as high as possible (for example, FRET should have about a 1-100%, e.g., a 30%, 40%, 50%, 60%, 70%, 80%, 85%, 90%, 95%, 98%, and 99% efficiency over a measured distance of 1-20 nm, e.g., 5-10 nm); (4) the FRET signal (i.e., fluorescence) must be distinguishable from fluorescence produced by the sample, e.g., autofluorescence; and (5) the FRET donor and the FRET acceptor should have half lives that facilitate detection of the FRET signal (e.g., FRET can be bright and can occur on a timescale ranging from 10⁻⁹ seconds to 10⁻⁴ seconds, as described above).

Any FRET acceptor that is excited at about 600-635 nm or about 675-715 nm can be used in the present methods. In some embodiments, U*Light*® is used, together with a FRET acceptor that is excited in the near infrared wavelength range. Skilled practitioners will appreciate the numerous commercially available FRET acceptors that can be used, e.g., FRET acceptors commercially available at PerkinElmer (e.g., LANCE® products), Invitrogen (e.g., LanthaScreen® products), and Cisbio Bioassays (e.g., HTRF® products).

In some embodiments, the FRET donor and the FRET acceptor may be chosen based upon one or more of the fluorophores listed in **Table 1.**

**Table 1. Examples of FRET Molecules**

| **FLUOROPHORE** | **Excitation (nm)** | **Emission (nm)** |
|---|---|---|
| 5 -Carboxynapthofluorescein | 512/598 | 563/668 |
| 5-ROX (carboxy-X-rhodamine) | 578 | 604 |
| | 567 | 591 |
| Alexa Fluor 568™ | 577 | 603 |
| Alexa Fluor 594™ | 590 | 617 |
| | 594 | 618 |
| Alexa Fluor 633™ | 632 | 650 |
| Alexa Fluor 647™ | 647 | 666 |
| Alexa Fluor 660™ | 668 | 698 |
| Alexa Fluor 680™ | 679 | 702 |
| Allophycocyanin (APC) | 630-645 | 655-665 |
| APC-Cy7 | 625-650 | 755 |
| BOBO™ -3 | 570 | 602 |
| Bodipy | 492-591 | 509-676 |
| Bodipy TR | 589 | 617 |
| Bodipy TR ATP | 591 | 620 |
| Calcium Crimson™ | 588 | 611 |
| | 589 | 615 |
| Carboxy-X-rhodamine (5-ROX) | 576 | 601 |
| Cy3.5™ | 581 | 598 |
| Cy5.1 8 | 649 | 666 |
| Cy5.5™ | 675 | 695 |
| CY5™ | 649 | 666 |
| Cy7™ 710, 743 767, 805 | 710 | 767 |
| | 743 | 805 |
| Dysprosium | 305-335 | 465-495 |
| | | 565-595 |
| Europium | 315-350 | 600-635 |
| | | 675-715 |
| Europium (III) chloride | 315-350 | 600-635 |
| | | 675-715 |
| FL-645 | 615-625 | 665 |
| Fura Red™ (high pH) | 572 | 657 |
| LaserPro | 795 | 812 |
| Samarium | 325-355 | 475-505 |
| | | 545-575 |
| | | 585-615 |
| | | 630-660 |
| SureLight™ | 640-660 | 660-680 |
| Terbium | 305-335 | 475-505 |
| | | 530-560 |
| | | 570-600 |
| | | 605-635 |
| Texas Red™ | 595 | 620 |
| Texas Red-X™ conjugate | 595 | 615 |
| Thiadicarbocyanine (DiSC3) | 651 | 674 |
| | 653 | 675 |
| Thiazine Red R | 596 | 615 |
| TO-PRO-1 | 515 | 531 |
| TO-PRO-3 | 644 | 657 |
| TO-PRO-5 | 747 | 770 |
| TOTO-3 | 642 | 660 |
| U*Light*® | 630-655 | 655-675 |
| Ultralite | 656 | 678 |
| X-Rhodamine | 580 | 605 |
| XRITC | 582 | 601 |
| YO-PRO-3 | 613 | 629 |

The following information may also be considered when selecting a FRET donor and FRET acceptor combination.

U.S. Patent No. 5,998,146 describes the use of lanthanide chelate complexes, in particular of europium and terbium complexes combined with fluorophores or quenchers. It also describes properties of the long-lived lanthanide chelate complexes.

FRET systems based on metallic complexes as energy donors and dyes from the class of phycobiliproteins as energy acceptors are known in the art (EP 76 695; Hemmilae, Chemical Analysis 117, John Wiley & Sons, Inc., (1991) 135-139). Established commercial systems (e.g., from Wallac, OY or Cis Bio Packard) use a FRET pair consisting of a lanthanide chelate as the metallic complex and a phycobiliprotein.

The properties of the lanthanide-chelate complexes in particular of europium or terbium complexes are known and can be used in combination with quenchers as well as in combination with fluorophores.

Ruthenium complexes *per se* are used as fluorophores or luminophores especially for electro-chemoluminescence. Ruthenium-chelate complexes are, for example, known from EP 178 450 and EP 772 616 in which methods for coupling these complexes to biomolecules are also described. Their use as energy donors in FRET systems is not discussed there.

Allophycocyanins have properties such as unusually high extinction coefficients (about 700000 L/M cm) and also extremely high emission coefficients. These are useful prerequisites for their use as fluorophore acceptors in FRET systems. Moreover these dyes are known to be readily soluble in water and stable.

The term low molecular fluorophore refers to fluorophoric dyes having a molecular weight between 300 and 3000 Da. Such low molecular fluorophoric groups such as xanthenes, cyanins, rhodamines and oxazines have considerable disadvantages compared to the APCs with regard to important characteristics. Thus for example their extinction coefficients are substantially lower and are in the range of ca. 100000 L/M cm.

Methods for labeling a molecule for FRET are known in the art. For example, binding partners can be labeled directly or indirectly (e.g., via a tag or using avidin-streptavidin interactions), as described by Yang et al., Analytical Biochemistry 351:158-160, 2006. In some embodiments, binding partners can be labeled directly. Methods for directly labeling a binding member are known in the art. These methods include labeling the molecules with a FRET donor and a FRET acceptor. Generally binding partners, e.g., proteins, may be prepared in a 100 µM bicarbonate buffer (pH 8.3), to a final protein concentration of about 1.0 mg/ml. This solution may then be mixed with a desired label, and incubated at room temperature for about one hour. Unincorporated label can then be separated from the molecule, e.g., the protein, using a micro column.

### TR-FRET

The methods and assays of the invention make use of homogeneous TR-FRET assay techniques. TR-FRET is a combination of time-resolved fluorescence (TRF) and FRET. TRF reduces background fluorescence by delaying reading the fluorescent signal, for example, by about 10 nano seconds. Following this delay (i.e., the gating period), the longer lasting fluorescence in the sample is measured. Thus, using TR-FRET, interfering background fluorescence, that may for example be due to interfering substances in the sample, is not co-detected, but rather, only the fluorescence generated or suppressed by the energy transfer is measured. The resulting fluorescence of the TR-FRET system is determined by means of appropriate measuring devices. Such time-resolved detection systems use, for example, pulsed laser diodes, light emitting diodes (LEDs) or pulsed dye lasers as the excitation light source. The measurement occurs after an appropriate time delay, i.e., after the interfering background signals have decayed. Devices and methods for determining time-resolved FRET signals are described in the art.

This technique requires that the signal of interest must correspond to a compound with a long fluorescent lifetime. Such long-lived fluorescent compounds are the rare earth lanthanides. For example, Eu³⁺ has a fluorescent lifetime in the order of milliseconds.

TR-FRET requires a FRET donor and a FRET acceptor, as described above. As with FRET, a TR-FRET donor and acceptor pair can be selected based on one or more, including all, of the following: (1) the emission spectrum of the FRET donor should overlap with the excitation spectrum of the FRET acceptor; (2) The emission spectra of the FRET partners(i.e., the FRET donor and the FRET acceptor) should show non-overlapping fluorescence; (3) the FRET quantum yield (i.e., the energy transferred from the FRET donor to the FRET acceptor) should be as high as possible (for example, FRET should have about a 1-100%, e.g., a 30%, 40%, 50%, 60%, 70%, 80%, 85%, 90%, 95%, 98%, and 99% efficiency over a measured distance, of 1-20 nm, e.g., 5-10 nm); (4) the FRET signal (i.e., fluorescence) must be distinguishable from fluorescence produced by the sample, e.g., autofluorescence; and (5) the FRET donor and the FRET acceptor should have half lives that allow detection of the FRET signal (e.g., FRET can be bright and can occur on a timescale ranging from 10⁻⁹ seconds to 10⁻⁴ seconds).

In some embodiments, the TR-FRET donor and the TR-FRET acceptor may be chosen based upon one or more of the fluorophores listed in **Table 1**.

The TR-FRET donor may be a europium ion, e.g., a europium ion bound to a chelate. As used herein, Eu includes Eu and all Eu ions, e.g., Eu³⁺. It is to be understood that selection of the appropriate TR-FRET donor requires consideration of the above listed criteria and the specific TR-FRET acceptor selected.

In some embodiments, the TR-FRET acceptor may be selected from the group consisting of fluorescein, Cy5, allophycocyanin (APC- e.g., XL665, d2, and BG-647), and a fluorescent protein (e.g., GFP, CFP, YFP, BFP, RFP, and other GFP variants).

In some embodiments, the TR-FRET donor may be terbium and the TR-FRET acceptor may be fluorescein. In some embodiments, the TR-FRET donor may be Eu and the TR-FRET acceptor may be Cy5 or APC (e.g., XL665, d2, BG-647, and Cy5-related TR-FRET acceptors).

In some embodiments, the TR-FRET donor and the TR-FRET acceptor may be combined with a second compound that enhances the function of the TR-FRET donor and/or the TR-FRET acceptor. For example, the TR-FRET donor and the TR-FRET acceptor may be combined with cryptate encapsulation to extend the half-life of the fluorophore. Alternatively, or in addition, the TR-FRET donor the TR-FRET acceptor may be combined with, e.g., DELFIA® enhancement system. In some embodiments, the TR-FRET donor and the TR-FRET acceptor may be combined with, for example, buffers, salts, enhancers, chelators, and stabilizers (e.g., photo-stabilizers) that enhance or extend the life or detection of the TR-FRET signal.

A variety of other reagents may also be included in the screening assays described above. These include reagents like salts, neutral proteins, e.g., albumin, detergents, etc., that are used to facilitate optimal protein-protein binding and/or reduce nonspecific or background interactions. Reagents that improve the efficiency of the assay, such as protease inhibitors, nuclease inhibitors, anti-microbial compounds, etc., may be used. The mixture of components is added in any order that provides for the requisite binding. Incubations are performed at any suitable temperature, typically between 4 and 40°C. Incubation periods are selected for optimum activity, but may also be optimized to facilitate rapid high-throughput screening.

Molecules, e.g., proteins, may be labeled directly or indirectly with suitable TR-FRET donors and acceptors, as described above and described in U.S. Patent No. 4,925,804, U.S. Patent No. 5,637,509, U.S. Patent No. 4,761,481, U.S. Patent No. 4,920,195, U.S. Patent No. 5,032,677, U.S. Patent No. 5,202,423, U.S. Patent No. 5,324,825, U.S. Patent No. 5,457,186, U.S. Patent No. 5,571,897, U.S. Patent No. 7,250,517, US2005/0202565.

### Applications

The technology described herein relates, in part, to detecting interactions between at least two molecules, e.g., an analyte and an analyte-specific binding partner. Examples of analyte-specific binding partners include, for example, proteins, antibodies, aptamers, and peptides. Also provided herein are methods to determine the presence or absence of two analytes with two analyte-specific binding partners and one FRET donor. Generally, the methods involve the use of (i) an analyte-specific binding partner associated with a first member of a FRET pair and (ii) an analyte associated with a second member of the FRET pair. The second analyte-specific binding partner can be associated with same first member of the FRET pair and the second analyte associated with a second member of the FRET pair, which is excited by a different emission wavelength of the first member of the FRET pair.

In such methods, interaction of the analyte with the analyte-specific binding partner results in the generation of a detectable light signal. The light signal is measured as a readout of the presence or absence of analyte or amount of the analyte associated with the analyte-specific binding partner. The light signal can be, e.g., light emission from the analyte, which is generated when the second member of the FRET pair (e.g., a FRET acceptor) becomes excited by an emission from the first member of the FRET pair (e.g., the FRET donor).

High concentrations of the analyte-specific binding partner allow for increased avidity for the analyte. Thus, the methods described herein can exhibit increased sensitivity where, e.g., low concentrations of analyte are present. In addition, the methods described herein can be performed without the need or aid of radioisotopes.

A method to detect an analyte, e.g., a modified analyte such as a phosphorylated molecule, or a method to detect or analyze the interaction between an analyte and an analyte-specific binding partner, is carried out as follows. A sample containing an analyte associated with a second member of a FRET pair is contacted with an analyte-specific binding partner associated with a first member of a FRET pair. An interaction between the analyte and the analyte-specific binding partner can be detected by first exciting the first member of the FRET pair with light. This light excites the first member of the FRET pair, which in turn emits light at a wavelength capable of exciting the second member of the FRET pair. The excited second member of the FRET pair then emits a light signal that is detected by a detector. The presence or amount of the light signal emitted by the second member of the FRET pair indicates the presence or amount of analyte associated with the analyte-specific binding partner.

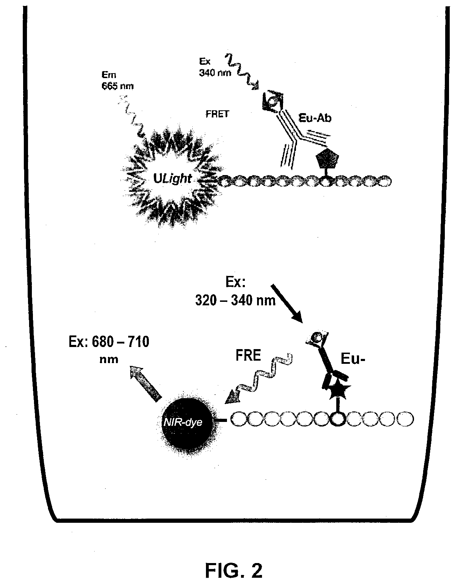

In one exemplary assay configuration, a method to determine the presence or absence of two analytes, e.g., peptides, proteins, or post-translational modifications of the same, in a sample, as shown in **FIG. 2**, is carried out as follows. For example, the two analytes, e.g., peptides, are labeled with different FRET acceptors, e.g., *ULight* and a near-infrared (NIR)-dye, e.g., Cy7™. The analytes are recognized by each of their own specific binding partners, e.g., antibodies, that are conjugated to a lanthanide chelate moiety, e.g., a europium chelate FRET donor, which acts as the FRET donor for both FRET acceptors. The europium chelate is excited with applied light at 315-350 nm and then emits light in the wavelength ranges of about 600-635 nm and about 675-715 nm, which in turn excites the two FRET acceptors (e.g., *ULight* or another FRET acceptor excitable in the 600-635 nm range, and Cy7™ or another FRET acceptor excitable in the 675-715 nm range) that are associated with the analytes. Following excitation, the FRET acceptors emit light at about 655-675 nm (*ULight*) and about 715-740 nm (Cy7™). The emitted light is then detected and correlated with the presence, absence, or amount of the analytes in the sample. The method allows for, e.g., two different enzymatic activities to be tested on a substrate in a sample or for the activity of a single enzyme on two different substrates to be tested in a sample.

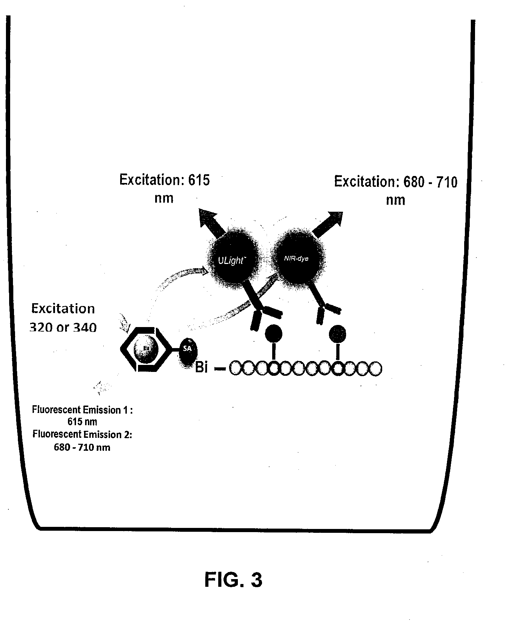

In another exemplary assay configuration, as shown in **FIG. 3**, an analyte is labeled with a tag (e.g., non-peptide tags such as biotin, digoxigenin, fluorescein, dinitrophenol and also peptidic tags such as FLAG, HisTag, cmyc, HA, V5, streptag). The tag is recognized and bound by an anti-tag molecule (such as streptavidin/streptactin for biotin and streptag or antibodies for the others) labeled with a lanthanide ion chelate, e.g., a europium or terbium ion chelate. The complex is a target of an analyte-specific binding partner, e.g., an antibody, labeled with a FRET acceptor molecule. This allows for testing of two different enzymatic activities in one sample or the testing of the activity of a single enzyme on two different substrates. It also allows the testing of several activities on a single substrate.

Another application of the present methods is related to the high penetration of infrared light. Using near-infrared emission, the signal will be able to penetrate through complex and often opaque matrixes such as high density membrane preparations, tissue extracts, blood (and blood derivatives including serum and plasma), cell lysates and cell culture supernatants, and other biological fluids (cerebrospinal fluid, urine), which makes the present method applicable to in vivo TR-FRET assays.

The methods for detecting interactions can be used to, e.g., determine the specificity of a particular analyte-specific binding partner or vice versa. For example, the methods can be used to determine the binding specificity of a nucleic acid binding protein such as a transcription factor (e.g., a zinc finger protein). For example, one analyte-specific binding partner can be associated with a first nucleic acid sequence and another analyte-specific binding partner can be associated with a second nucleic acid sequence. Each of the first and second nucleic acid sequences can be contacted with a nucleic acid binding protein target-molecule.

The methods can, and may generally, be carried out in an aqueous buffered medium at a physiological pH. However, any of a variety of conditions can be employed that provide acceptable assay sensitivity (that is, acceptable binding between the analyte-specific binding partner and the analyte, acceptable activity for an enzyme, and/or acceptable FRET between the FRET pairs). The pH for the sample can be in the range of about 4 to 13 (e.g., about 5 to 10 or about 6.5 to 9.5). The pH is generally selected to achieve acceptable assay sensitivity and specificity. Among the factors that must be considered are the pH dependence of the rates of the reactions involved, the binding of binding members and the reduction of nonspecific binding, and so forth.

Various buffers may be used to achieve the desired pH and maintain the pH during the determination. Illustrative buffers include borate, phosphate, carbonate, or tris (see, e.g., Sambrook et al., 1989, Molecular Cloning - A Laboratory Manual, Cold Spring Harbor Press).

While the concentrations of the various reagents in the assay medium will generally be determined by the concentration range of interest of the components to be detected, the final concentration of each of the reagents can be determined empirically to optimize the sensitivity of the assay over the range.

Any of a variety of light-emitting and light-detecting instruments can be used to initiate FRET (e.g., excite a FRET donor or excite a reagent capable of exciting the FRET donor) and/or detect an emission produced from said FRET. The light emissions produced by the first and second member of the FRET pair as a result of the above methodologies can be detected or measured visually, photographically, actinometrically, spectrophotometrically, or by any other convenient means to determine the amount thereof, which is related to the amount of each component in the medium. For example, the interaction between an analyte and an analyte-specific binding partner can be detected and/or measured using a luminometer.

Method of detection (or any screening methods described herein) can be performed in any format that allows for rapid preparation, processing, and analysis of multiple reactions. This can be, for example, in multi-well assay plates (e.g., 96 wells or 386 wells). Stock solutions for various agents can be made manually or robotically, and all subsequent pipetting, diluting, mixing, distribution, washing, incubating, sample readout, data collection and analysis can be done robotically using commercially available analysis software, robotics, and detection instrumentation capable of detecting FRET. Specific instruments that can be used in conjunction with the methods and compositions described herein include, e.g., the Victor™, EnVision™, Fusion™, and ViewLux™ apparatuses commercially available from PerkinElmer (Boston, MA).

In some embodiments, any of the methods described herein can include the step of obtaining the analyte. For example, where the analyte is an antibody, the methods can include the step of isolating the antibody from, e.g., a host animal (e.g., a mammal such as a rat, rabbit, mouse, goat, cow, horse, dog, cat, or a human) or cell (e.g., a hybridoma) that produces the antibody. In another example, where the analyte is a transcription factor, the methods can include the step of isolating the transcription factor from a natural source or obtaining a recombinant transcription factor. Methods for obtaining or isolating an analyte from natural or recombinant sources are described above in detail as well as in the section entitled "Samples."

In some embodiments, any of the methods described herein can also include the step of conjugating the analyte to a member of a FRET pair.

The above-described methods can be used in a variety of applications including, but in no way limited to, the following.

### Detecting Enzymatic Activity

Described herein are various methods for detecting enzymatic activity in a sample. As aberrant function or expression of any of numerous enzymatic activities (e.g., kinases, acetylases, methyltransferases, phosphatases, or metabolic enzymes such an enzymes involved in the Kreb's cycle) are associated with disease states (such as cancer, inflammatory conditions, or metabolic disorders), the compositions described herein are useful in, e.g., methods for determining whether or not a subject has, or is at risk of developing, a disease characterized by aberrant function or expression of an enzyme. Any enzymatic activity can be detected, particularly those involving post-translational modifications, e.g., where a chemical group is added or removed.

The methods can include the steps of: contacting analyte-specific binding partners and their respective analytes; and detecting binding of the analytes to their respective analyte-specific binding partners. A difference in binding of an analyte to an analyte-specific binding partner in the presence of the sample as compared to the binding in the absence of the sample indicates the presence, absence, or amount of an enzymatic activity in the sample. In some embodiments, the analyte is associated with a solid-phase support. See, for example, US 2008/0261239.

The methods can also include the step of covalently or non-covalently binding the second member of the FRET pair to the analyte and/or covalently or non-covalently binding the analyte-specific binding partner to a solid-phase support. Methods for covalent or noncovalent binding are described in US 2008/0261239.

Any of a wide variety of enzymatic activities can be detected by the methods described herein. For example, the enzymatic activity can be, e.g., a protease activity, a kinase activity, a phosphatase activity, a phosphodiesterase activity, a nucleotide cyclase activity, a ubiquitin ligase activity, a methyltransferase activity, an acetylase activity, a deacetylase activity, a DNA polymerase activity, an RNA polymerase activity, a DNA ligase activity, and an isomerase activity. Additional information on enzymatic activities is provided below.

Examples of types of proteases that can be detected, measured, or otherwise analyzed using a method or composition described herein include, but are not limited to: serine proteases (e.g., trypsin, chymotrypsin, elastase, or subtilisin), threonine proteases, cysteine proteases (e.g., papain, cathepsins, caspases, or calpains), asparatic acid proteases (e.g., HIV-1 protease, chymosin, renin, or plasmepsin), metalloproteases, and glutamic acid proteases.

Kinases are enzymes capable of modifying a substrate by adding one or more phosphate groups to it (a process termed "phosphorylation"). The activity of a large number of different types of kinases can be detected or measured using the compositions and methods described herein. For example, the activity of a tyrosine kinase, threonine/serine kinase, saccharide kinase, or lipid kinase can be detected or measured. Exemplary kinases include, e.g., the Akt kinase family, Aurora kinase family, PDK1, MAPKAP K2, Erk kinase family, CAMK kinase family, cyclin dependent kinases (e.g., CDK1, CDK2, CDK4, CDK6), RAF kinase family, casein kinase family, PKC family, PKA family, PKB family, PKG family, GSK3 beta, ROCK, SGK, Rsk family and Nek family; a protein tyrosine kinase including receptor tyrosine kinases, such as FGFR, EGFR, PDGFR, c-Kit, IGFR, insulin receptor, TrkA, TrkB, TrkC, c-Met or c-Ret, and cytoplasmic tyrosine kinases, such as Src, Lck, Lyn, Fyn, Yes, Syk, Hck, Abl and Eph family; or a lipid kinase, such as PI3 kinase, PI4 kinase, or PI5 kinase.

Phosphatases are capable of removing a phosphate moiety from a substrate. Phosphatase activity can include, e.g., tyrosine-specific phosphatase, threonine/serine phosphatase, dual-specificity phosphatase, saccharide phosphatase, histidine-specific phosphatase, or lipid phosphatase activity.

Acetylases is a type of transferase enzyme that transfers an acetyl group from a donor to an acceptor. Examples include histone acetyltransferases, including CBP histone acetyltransferase, choline acetyltransferase, chloramphenicol acetyltransferase, serotonin N-acetyl transferase, NatA acetyltransferase, and NatB acetyltransferase.

Deacetylases are enzymes that remove acetyl groups from residues in proteins. Examples include histone deacetylases and sirtuins.

A methyltransferase, also known as a methylase, is a type of transferase enzyme that transfers a methyl group from a donor to an acceptor. Methylation often occurs on nucleic bases in DNA or amino acids in protein structures. Methytransferases can use a reactive methyl group bound to sulfur in S-adenosylmethionine as the methyl donor.

Demethylases are enzymes that remove methyl groups from proteins and other substances. They are used in a variety of processes, such as in gene regulation, chemotaxis, and signal transduction.

Glycosylation is a reaction in which a carbohydrate, i.e., a glycosyl donor, is transferred to a hydroxyl or other functional group of another molecule (a glycosyl acceptor). Glycosylases are enzymes that attach glycans to proteins, lipids, nucleic acids, or other organic molecules. Deglycosylation is a reaction that removes a carbohydrate group from a molecule.

A ubiquitin ligase (also called an E3 ubiquitin ligase) is a protein that in combination with an E2 ubiquitin-conjugating enzyme causes the attachment of ubiquitin to a lysine on a target protein via an isopeptide bond; the E3 ubiquitin ligase targets specific protein substrates for degradation by the proteasome. In general, the ubiquitin ligase is involved in polyubiquitination: a second ubiquitin is attached to the first, a third is attached to the second, and so forth. Polyubiquitination marks proteins for degradation by the proteasome.

Deubiquitinating enzymes (DUBs) are a large group of proteases that regulate ubiquitin-dependent metabolic pathways by cleaving ubiquitin-protein bonds. The human genome encodes nearly 100 DUBs with specificity for ubiquitin in five gene families. Potentially, DUBs may act as negative and positive regulators of the ubiquitin system. In addition to ubiquitin recycling, they are involved in processing of ubiquitin precursors, in proofreading of protein ubiquitination and in disassembly of inhibitory ubiquitin chains.

Sumoylation is a post-translational modification that plays a role in various cellular processes, such as nuclear-cytosolic transport, transcriptional regulation, apoptosis, protein stability, response to stress, and progression through the cell cycle. Small Ubiquitin-like Modifier (SUMO) proteins are attached to and detached from other proteins in cells to alter their function. The detection of in vivo protein SUMOylation (SUMO conjugation) would provide useful information for understanding the SUMO modification that emerges as an important control mechanism for regulating the activity of many nuclear proteins. SUMO attachment to its target is similar to that of ubiquitin (as it is for the other ubiquitin-like proteins such as NEDD 8). A C-terminal peptide is cleaved from SUMO by a protease (in human these are the SENP proteases or Ulpl in yeast) using ATP to reveal a di-glycine motif. SUMO then becomes bound to an E1 enzyme (SUMO Activating Enzyme (SAE)) which is a heterodimer. It is then passed to an E2 which is a conjugating enzyme (Ubc9). Finally, one of a small number of E3 ligating proteins attaches it to the protein.

Phosphodiesterases (e.g., cyclic nucleotide phosphodiesterases) comprise a large group of enzymes organized into 11 distinct families based on biochemical and molecular properties. For example, PDEs include human Phosphodiesterase 3B, human Phosphodiesterase 11A1, human Phosphodiesterase 4A4, human Phosphodiesterase 4D3, and calf spleen Phosphodiesterase (Type II).

The enzymatic activity can be capable of modifying the analytes and/or the analyte-specific binding partners. For example, the enzymatic activity can phosphorylate the analyte or the analyte-specific binding partner.

In some embodiments of the method, a decreased binding between an analyte and its analyte-specific binding partner in the presence of a sample as compared to the amount of binding in the absence of the sample indicates the presence, absence, or amount of an enzymatic activity in the sample. For example, the presence of a particular protease activity in a sample that is capable of removing a portion of an analyte that binds to its analyte-specific binding partner could be detected by way of a reduction in the amount of binding between the analyte and the analyte-specific binding partner. In another example, where the analyte-specific binding partner preferentially binds to a non-phosphorylated analyte and a phosphate moiety is removed by a particular phosphatase, the presence or amount of the phosphatase in a sample can be determined as a reduction in binding between an analyte-specific binding partner and a phosphorylated analyte.

In some embodiments of the method, an increased binding between the analyte and analyte-specific binding partner in the presence of a sample as compared to the amount of binding in the absence of the sample indicates the presence or amount of an enzymatic activity in the sample. For example, where an analyte-specific binding partner preferentially binds to a phosphorylated analyte and the analyte is phosphorylated by a particular kinase, the presence or amount of the kinase in a sample can be determined by an increase in the amount of binding between the analyte-specific binding partner and the analyte.

### Identifying a Compound that Modulates an Interaction or Enzymatic Activity

Also featured herein are methods for identifying a compound that modulates the binding between an analyte and an analyte-specific binding partner. The methods can include the steps of: contacting, in the presence of a candidate compound, an analyte and an analyte-specific binding partner and a first member of a FRET pair, wherein the analyte is associated with a second member of the FRET pair; and detecting binding of the analyte to the analyte-specific binding partner, wherein a difference in binding of the analyte to the analyte-specific binding partner in the presence of the candidate compound as compared to the binding in the absence of the candidate compound indicates that the candidate compound modulates the interaction between the analyte-specific binding partner and the analyte.

The methods can also include the step of covalently or non-covalently binding the second member of the FRET pair to the analyte and/or covalently or non-covalently binding the analyte-specific binding partner to a solid-phase support. Methods for covalent or noncovalent binding are described in US 2008/0261239.

The methods can include the step of, after contacting the analyte-specific binding partner (associated with a solid-phase support) and the analyte, separating the solid-phase support from the unbound analyte (as described above).

A candidate compound can be contacted with an analyte prior to contacting the analyte with the analyte-specific binding partner. A candidate compound can be contacted with the analyte-specific binding partner prior to contacting the analyte-specific binding partner and the analyte. In some embodiments, the analyte-specific binding partner can be contacted with the analyte in the presence of the candidate compound (that is, the analyte and analyte-specific binding partner are both contacted with the candidate compound at the same time).

The candidate compound can be, e.g., any of the compounds described herein (see below under "Compounds"). The candidate compound can be a compound that inhibits or enhances the binding between the analyte-specific binding partner and the analyte.

In some embodiments of the methods, a decreased binding between the analyte and the analyte-specific binding partner in the presence of a candidate compound as compared to the amount of binding in the absence of the compound indicates that the compound inhibits the interaction between the analyte-specific binding partner and the analyte.

In some embodiments of the method, an increased binding between the analyte and the analyte-specific binding partner in the presence of a candidate compound as compared to the amount of binding in the absence of the compound indicates that the compound enhances the interaction between the analyte-specific binding partner and the analyte.

Methods for identifying a compound that modulates the activity of an enzyme can include the steps of providing an analyte-specific binding partner and a first member of a FRET pair; an analyte comprising a second member of the FRET pair; and an enzyme capable of modifying one or both of the analyte-specific binding partner and the analyte; contacting, in the presence of the enzyme and a candidate compound, the analyte and the analyte-specific binding partner; and detecting binding of the analyte to the analyte-specific binding partner, wherein a difference in binding of the analyte to the analyte-specific binding partner in the presence of the candidate compound as compared to the binding in the absence of the candidate compound indicates that the candidate compound modulates the activity of the enzyme.

The methods can also include the step of covalently or non-covalently binding the second member of the FRET pair to the analyte and/or covalently or non-covalently binding the analyte-specific binding partner to the solid-phase support. Methods for covalent or noncovalent binding are described above.

The methods can include the step of, after contacting the analyte-specific binding partner (associated with the solid-phase support) and the analyte, separating the solid-phase support from the unbound analyte (as described above).

An enzyme and candidate compound can be contacted with an analyte prior to contacting the analyte with the analyte-specific binding partner. An enzyme and candidate compound can be contacted with the analyte-specific binding partner prior to contacting the analyte-specific binding partner and the analyte. In some embodiments, the analyte-specific binding partner can be contacted with the analyte in the presence of the enzyme and the candidate compound. The enzyme can be, e.g., any of those described herein. The candidate compound can be, e.g., any of the compounds described herein (see below under "Compounds"). The candidate compound can be a compound that inhibits or enhances the binding between the analyte-specific binding partner and the analyte.

In some embodiments of the methods, a decreased binding between the analyte and the analyte-specific binding partner in the presence of a candidate compound as compared to the amount of binding in the absence of the compound indicates that the candidate compound inhibits the activity of the enzyme. In some embodiments of the method, an increased binding between the analyte and the analyte-specific binding partner in the presence of a candidate compound as compared to the amount of binding in the absence of the compound indicates that the compound enhances the enhances the activity of the enzyme.

For example, where the analyte is capable of being phosphorylated by a kinase and the analyte-specific binding partner is capable of binding to phosphorylated forms of the analyte (e.g., deferoxamine and a trivalent metal cation), the activity of a kinase can be determined by the amount of binding between the target-molecule and analyte-specific binding partner in the presence of the kinase. As described above, the analyte can be incubated with the kinase (under conditions that allow for the phosphorylation of the analyte) in the presence and absence of a candidate compound. A decreased amount of binding of the analyte-specific binding partner to the analyte in the presence of the candidate compound as compared to the binding of the analyte-specific binding partner to the analyte in the absence of the compound indicates that the compound inhibits the activity of a kinase. Conversely, an increased amount of binding of the analyte-specific binding partner to the analyte in the presence of the candidate compound as compared to the binding of the analyte-specific binding partner to the analyte in the absence of the compound indicates that the compound enhances the activity of the kinase.

In some embodiments of the methods, an increased binding between the analyte and the analyte-specific binding partner in the presence of a candidate compound as compared to the amount of binding in the absence of the compound indicates that the candidate compound inhibits the activity of the enzyme. In some embodiments of the method, decreased binding between the analyte and the analyte-specific binding partner in the presence of a candidate compound as compared to the amount of binding in the absence of the compound indicates that the compound enhances the enhances the activity of the enzyme.

### Samples

A sample can be any composition. The content of the sample can be known or unknown. In many cases, a sample contains or is suspected of containing one or more enzymatic activities. A sample can be derived from an organism or can be a man-made source of enzyme. A sample can be, e.g., one containing one or more enzymes in a known quantity or with a known activity.

In some embodiments, a sample can contain one or more analytes (e.g., any of the analytes described herein) or one or more analytes associated with a second member of a FRET pair.

A sample can be, for example, a specimen obtained from an individual or can be derived from such a specimen. For example, a sample can be a tissue section obtained by biopsy, or cells that are placed in or adapted to tissue culture. A sample can also be, or contain, a biological fluid specimen such as urine, blood, plasma, serum, saliva, semen, sputum, cerebral spinal fluid, tears, mucus, sweat, milk, semen, and the like. Biological samples can also be, or contain, fluid from ulcers or other surface eruptions such as blisters and abscesses or can be extracts of tissues from biopsies of normal, malignant, or suspect tissues. A sample can be further fractionated, if desired, to a fraction containing particular components or cell types. For example, a blood sample can be fractionated into serum or into fractions containing particular types of blood cells such as red blood cells or white blood cells (leukocytes). If desired, a sample can be a combination (pool) of samples from an individual such as a combination of a tissue and fluid sample, and the like.

A sample can be processed to facilitate detection of enzymes or their enzymatic activity. For example, if the sample includes cells or other biological structures, the sample can be treated with freeze/thaw treatment, drying and rehydrating, a dounce, detergent or other methods. Releasing or solubilizing enzymes can also be useful provided it does not interfere with the enzyme activity or the relevant assay method.

The sample can be obtained from body fluids and tissues in which particular enzymes being tested are typically expressed, e.g., liver enzymes obtained from liver.

Samples can be treated with customary care to preserve enzymatic activity and/or the activity or structure of analytes and analyte-specific binding partners. For example, where an analyte is isolated from a natural source such as a cell lysate, the cell lysate can be treated with a variety of buffering agents and/or inhibitors of proteolytic or nuclease activities that may affect the structure or function of the molecule. Suitable methods for obtaining samples that preserve the activity or integrity of enzymes, analytes, or analyte-specific binding partners in the sample are well known to those skilled in the art. Such methods include the use of appropriate buffers and/or inhibitors, including nuclease, protease and phosphatase inhibitors that preserve or reduce changes in enzymes in the sample. Such inhibitors include, for example, chelators such as ethylenediamine tetraacetic acid (EDTA), ethylene glycol bis(P-aminoethyl ether) N,N,N1,N1-tetraacetic acid (EGTA), protease inhibitors such as phenylmethylsulfonyl fluoride (PMSF), aprotinin, leupeptin, antipain and the like, and phosphatase inhibitors such as phosphate, sodium fluoride, vanadate and the like. Inhibitors can be chosen such that they do not interfere with or only minimally adversely affect the enzymatic activity of interest. For example, if the enzymatic activity to be detected is a protease, methods for obtaining samples that preserve the activity or integrity of the enzyme would not include protease inhibitors that adversely affect the particular protease activity. Appropriate buffers and conditions for enzyme-containing samples are well known (see, for example, Ausubel et al., Current Protocols in Molecular Biology (Supplement 47), John Wiley & Sons, New York (1999); Harlow and Lane, Antibodies: A Laboratory Manual (Cold Spring Harbor Laboratory Press (1988); Harlow and Lane, Using Antibodies: A Laboratory Manual, Cold Spring Harbor Press (1999); Tietz Textbook of Clinical Chemistry, 3rd ed. Burtis and Ashwood, eds. W.B. Saunders, Philadelphia, (1999)).

A sample can be processed to eliminate or minimize the presence of interfering substances, as appropriate. If desired, a sample can be fractionated by a variety of methods well known to those skilled in the art, including subcellular fractionation, and chromatographic techniques such as ion exchange, hydrophobic and reverse phase, size exclusion, affinity, hydrophobic charge-induction chromatography, and the like (Ausubel et al. supra, 1999; Scopes, Protein Purification: Principles and Practice, third edition, Springer-Verlag, New York (1993); Burton and Harding, J Chromatogr A 814:71-81, 1998).

For use in a method described herein, a sample can be in a variety of physical states. For example, a sample can be a liquid or solid, can be dissolved or suspended in a liquid, can be in an emulsion or gel, and can be absorbed onto a material.

One or more properties of a sample can be modified, such that the sample allows or more effectively allows, a binding interaction to occur and/or an enzyme to act on a substrate. Such properties are well known to those skilled in the art and generally include salt concentration, pH, surfactant property, viscosity, and temperature.

### Compounds

Candidate compounds that can be screened in any of the methods described herein include various chemical classes. Compounds can be biomolecules including, but not limited to, peptides, polypeptides, peptidomimetics (e.g., peptoids), amino acids, amino acid analogs, saccharides, fatty acids, steroids, purines, pyrimidines, derivatives or structural analogues thereof, polynucleotides, and polynucleotide analogs. Compounds can be small or large molecule compounds.

Typically small molecule compounds are relatively small organic molecules having a molecular weight in the range of about 50 to 2,500 Daltons. These compounds can comprise functional groups necessary for structural interaction with proteins (e.g., hydrogen bonding), and can include at least an amine, carbonyl, hydroxyl, or carboxyl group, and preferably at least two of the functional chemical groups. These compounds can often comprise cyclical carbon or heterocyclic structures and/or aromatic or polyaromatic structures (e.g., purine core) substituted with one or more of the above functional groups.

Also of interest as small molecule compounds in some of the methods described herein are nucleic acid aptamers, which are relatively short nucleic acid (DNA, RNA or a combination of both) sequences that bind with high avidity to a variety of proteins and inhibit the binding to such proteins of ligands, receptors, and other molecules. Aptamers are generally about 25 - 40 nucleotides in length and have molecular weights in the range of about 8 - 16 kDa. Aptamers with high specificity and affinity for targets can be obtained by an *in vitro* evolutionary process termed SELEX (systemic evolution of ligands by exponential enrichment) (see, for example, Zhang et al., Arch Immunol Ther Exp 52:307-315, 2004). For methods of enhancing the stability (by using nucleotide analogs, for example) and enhancing *in vivo* bioavailability (e.g., *in vivo* persistence in a subject's circulatory system) of nucleic acid aptamers (see Zhang et al. (2004) and Brody et al., Reviews in Molecular Biotechnology 74:5-13, 2000).

Large molecule compounds can include large proteins such as antibodies (see below) or macromolecular complexes comprising two or more proteins.

Compounds can be identified from a number of potential sources, including: chemical libraries, natural product libraries, and combinatorial libraries comprised of random peptides, oligonucleotides, or organic molecules. Chemical libraries consist of random chemical structures, some of which are analogs of known compounds or analogs or compounds that have been identified as "hits" or "leads" in other drug discovery screens, while others are derived from natural products, and still others arise from non-directed synthetic organic chemistry. Natural product libraries are collections of microorganisms, animals, plants, or marine organisms which are used to create mixtures for screening by: (1) fermentation and extraction of broths from soil, plant or marine microorganisms, or (2) extraction of plants or marine organisms. Natural product libraries include polypeptides, non-ribosomal peptides, and variants (non-naturally occurring) thereof. For a review, see Science 282:63-68, 1998. Combinatorial libraries are composed of large numbers of peptides, oligonucleotides, or organic compounds as a mixture. These libraries are relatively easy to prepare by traditional automated synthesis methods, PCR, cloning, or proprietary synthetic methods.

Still other libraries of interest include peptide, protein, peptidomimetic, multiparallel synthetic collection, recombinatorial, and polypeptide libraries. For a review of combinatorial chemistry and libraries created therefrom, see Myers, Curr Opin Biotechnol 8:701-707, 1997. Identification of compounds through the use of the various libraries described herein permits subsequent modification of the test compound "hit" or "lead" to optimize the capacity of the "hit" or "lead" to inhibit the interaction between, e.g., an analyte-specific binding partner and an analyte.

Compounds can be large molecules such as antibodies, or antigen-binding antibody fragments, specific for, e.g., an analyte or an analyte-specific binding partner. Such antibodies and fragments thereof will generally bind to, or close to: (a) the region of the analyte-specific binding partner to which the analyte binds; or (b) the region of the analyte to which the analyte-specific binding partner binds. However, the compounds can also act allosterically and so they can also bind to the analyte or analyte-specific binding partner at positions other than the regions of the two molecules that mediate their interaction, but which otherwise affect their interaction. As used throughout the present application, the term "antibody" refers to a whole antibody (e.g., IgM, IgG, IgA, IgD, or IgE) molecule that is generated by any one of a variety of methods that are known in the art. The antibody can be made in, or derived from, any of a variety of species, e.g., humans, non-human primates (e.g., monkeys, baboons, or chimpanzees), horses, cattle, pigs, sheep, goats, dogs, cats, rabbits, guinea pigs, gerbils, hamsters, rats, and mice.

The antibody can be a purified or a recombinant antibody. Also useful are antibody fragments and chimeric antibodies and humanized antibodies made from non-human (e.g., mouse, rat, gerbil, or hamster) antibodies. As used herein, the term "antibody fragment" refers to an antigen-binding fragment, e.g., Fab, F(ab')₂, Fv, and single chain Fv (scFv) fragments. An scFv fragment is a single polypeptide chain that includes both the heavy and light chain variable regions of the antibody from which the scFv is derived. In addition, diabodies (Poljak, Structure 2(12):1121-1123, 1994; Hudson et al., J Immunol Methods 23(1-2):177-189, 1999) and intrabodies (Huston et al., Hum Antibodies 10(3-4):127-142, 2001; Wheeler et al., Mol Ther 8(3):355-366, 2003; Stocks, Drug Discov Today 9(22): 960-966, 2004) can be used in the methods of the invention.

Antibody fragments that contain the binding domain of the molecule can be generated by known techniques. For example: F(ab')₂ fragments can be produced by pepsin digestion of antibody molecules; and Fab fragments can be generated by reducing the disulfide bridges of F(ab')₂ fragments or by treating antibody molecules with papain and a reducing agent. See, e.g., National Institutes of Health, Current Protocols In Immunology, Coligan et al., ed. 2.8, 2.10 (Wiley Interscience, 1991), the disclosure of which is incorporated herein by reference in their entirety. scFv fragments can be produced, for example, as described in U.S. Patent No. 4,642,334.

The compounds identified above can be synthesized by any chemical or biological method or can be obtained from a natural source. The compounds identified above can also be pure, or can be in a formulation (e.g., a pharmaceutical composition) with one or more additional non-active ingredients (e.g., additional compounds or constituents which do not bind to or inhibit the interaction between an analyte-specific binding partner and an analyte), and can be prepared in an assay-, physiologic-, or pharmaceutically-acceptable diluent or carrier.

The invention is further described in the following examples, which do not limit the scope of the invention described in the claims.

### EXAMPLES

An enzymatic multiplex assay for the epigenetic lysine methyl-transferases SET7/9 and G9a. Both act on a peptide substrate derived from histone H3 at sites H3K4 and H3K9 for SET7/9 and G9a, respectively. The detection of the enzymatic assays used the time-resolved fluorescence resonance energy transfer LANCE® *Ultra* technology which is a non-radioactive, homogeneous proximity assay.

The results shown demonstrate that the assay is suitable for high-throughput screening, with Z' values of 0.79 and 0.80. The inhibitor specificity makes it a perfect assay for the screening of potential activators and inhibitors, which act differently on two targets.

### Materials and Methods

G9a Assay Buffer: 50 mM Tris-HCl pH 9.0, 50 mM NaCl, 1 mM DTT, and 0.01% Tween-20
SET7/9 Assay Buffer: 50 mM Tris-HCl pH 9.0, 5 mM MgCl₂, 1 mM DTT, and 0.01% Tween-20
LANCE® Detection Buffer
Biotin-H3 (1-21) (Anaspec Cat. No. 61702, Lot No. 71148)
SET7/9 human recombinant (Enzo Cat. No. 201-178-C100, Lot No. L25760/a)
G9a human recombinant (BPS Cat. No. 51001, Lot No. 101020)
S-(5'-Adenosyl)-L-methionine chloride (SAM) (Sigma A7007, Lot No. 119K5157)
Sinefungin 100 mM (Sigma S8559, Lot No. 100M4070)
Eu-W8044 Labeled SA (Cat. No. 502339B)
Anti-H3K9Me2 (Cat. No. 05-1249, Lot No. NG1800813)
Anti-H3K4 me2 (Cat. No. TRF0402, Lot No. 6)
*ULight* dye (SETA Cat. No. K8-1662, Lot No. 240211-7150)
AlexaFluor-700 dye (Invitrogen Cat. No. A20010, Lot No. 778180)
Poly-L-lysine (Sigma P8920)
White opaque 384-well Optiplates (Cat. No. 6007299) were from PerkinElmer, Inc.
TopSeal-A (Cat. No. 6005185) were from PerkinElmer, Inc.
Incubator set at 23°C
EnVision® reader was from PerkinElmer, Inc.

An enzymatic assay was followed, where 5 µL biotinylated H3 (1 - 21) peptide, 2.5 µL enzyme(s), 2.5 µL SAM, were incubated for 60 minutes at room temperature; 10 µL of detection mix: Europium-Streptavidin, ULight-anti-H3K9me2, NIR-dye-anti-H3K4me2, and PLK was added and incubated for 60 minutes at room temperature; and plates were read using the 337 nm LANCE® Laser and 665 nm/730 nm filters.

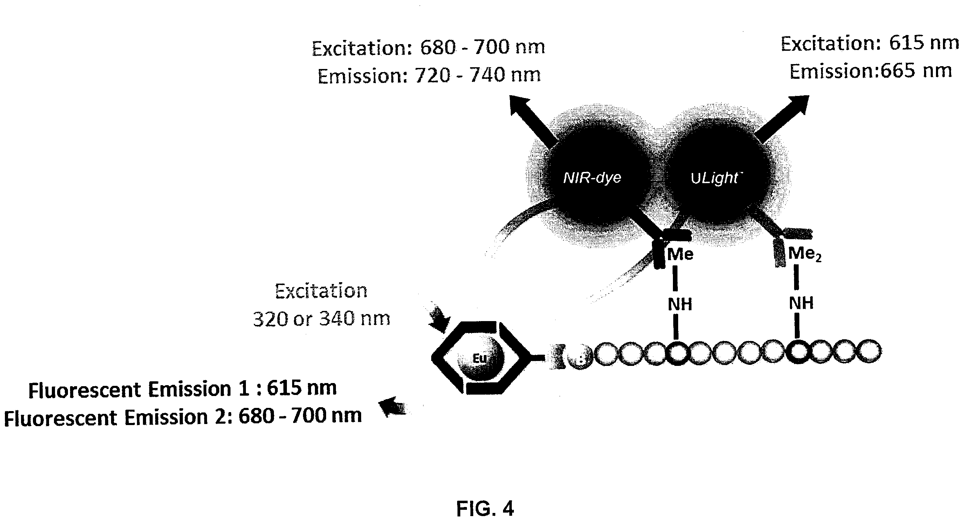

The assay principle is shown in **FIG. 4**, where dye-labeled antibody specifically recognizes the modified histone H3 peptide, while Europium-Streptavidin binds to the biotin group attached to it, allowing TR-FRET to occur.

### Example 1: Singleplex Detection Assays

The singleplex detection assay protocol was different than that of the enzymatic protocol and was done as follows: 5 µL ULight-anti-H3K9me2 or AlexaFluor-700-anti-H3K4me2, 5 µL bio-H3K4me2 (1 - 21) peptide, 5µl bio-H3K9me2 (1 - 21) peptide, 5 µL Europium-Streptavidin, incubate for 60 minutes at RT and read plate using the LANCE® Laser Filters at 665 nm and 730 nm.

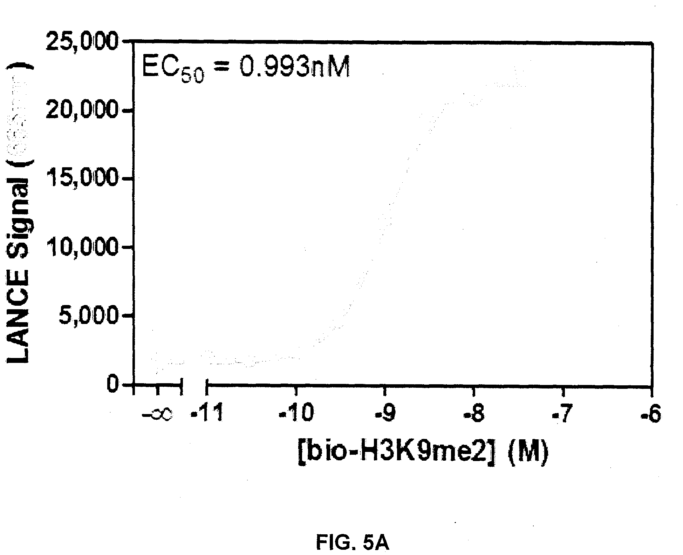

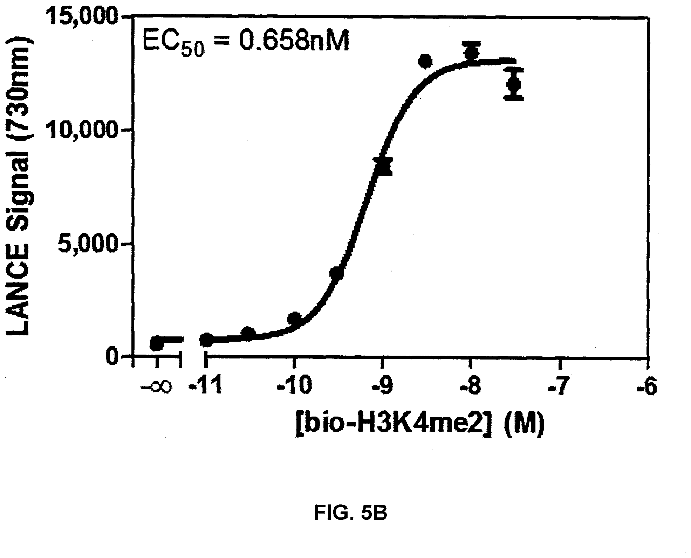

Titrations of bio-H3K4me2 (1 - 21) and bio-H3K9me2 were performed in **FIGs. 5A** and **5B**, respectively, at concentrations ranging from each dye-labeled antibody and Europium-Streptavidin were 30 nM and 3 nM, respectively.

### Example 2: Multiplex Detection Assay

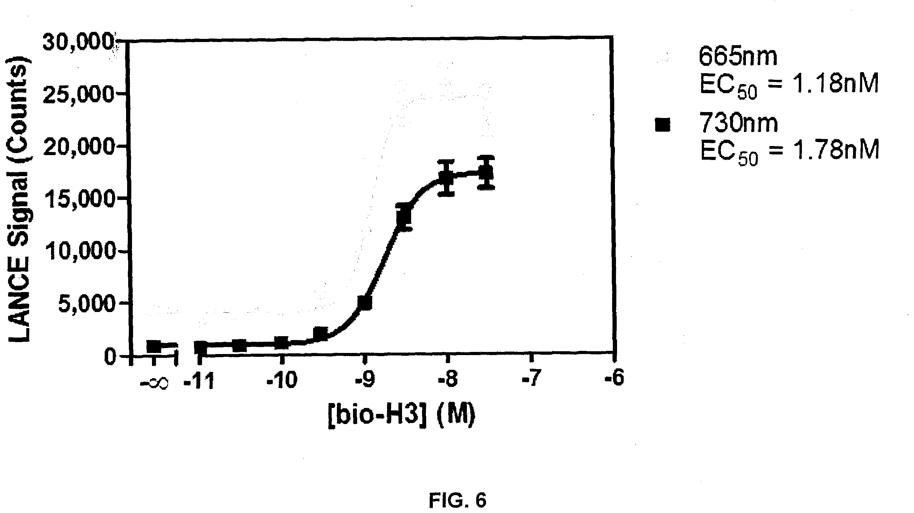

The multiplex detection assay has slightly different protocol than the singleplex detection assay was performed as follows: 5 µL ULight-anti-H3K9me2, 5 µL AlexaFluor-700-anti-H3K4me2, 5 µL bio-H3K4me2 (1 -21) peptide, 5 µL bio-H3K9me2 (1-21) peptide, 5 µL Europium-Streptavidin, incubate for 60 minutes at RT and read plate using the LANCE® Laser Filters at 665 nm and 730 nm
Substrate titrations were performed similarly to what was described above. It should be noted that the concentrations of ULight-anti-H3K9me2 and AlexaFluor-700-anti-H3K4me2 were 30 nM and 3 nM, respectively (**FIG. 6**).

### Example 3: Multiplex - Single-Enzyme, Enzyme Titration

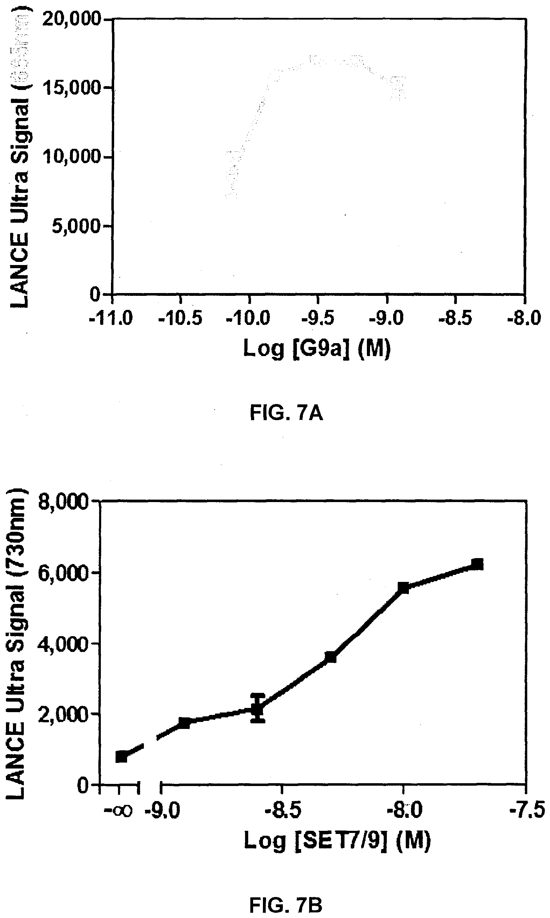

**FIG. 7A** shows a G9a titration over the concentration range of 0 - 1.2 nM. 300 nM bio H3 (1 - 21) peptide and 300 µM SAM were used for the enzymatic reaction and 3 nM Europium Streptavidin, 0.3nM AlexaFluor-700-anti-H3K4me2, 3nM ULight-anti-H3K9me2 and 0.0001% PLK were used for the detection. 0.3nM G9a was used in subsequent experiments. It should be noted that the enzymatic reaction incubation time was 30 minutes.

**FIG. 7B** shows a SET7/9 titration over the concentration range of 0 - 20 nM. The quantity of reagents used are similar to what is described above, except with 30 nM bio-H3 (1 - 21) peptide used in the enzymatic reaction, and 3 nM AlexaFluor-700-anti-H3K4me1 used for the detection. A 60 minute reaction time, 10 nM SET7/9 and 0.3 nM G9a was selected for future multiplex experiments.

### Example 4: Multiplex - Single-Enzyme, Cofactor Titration

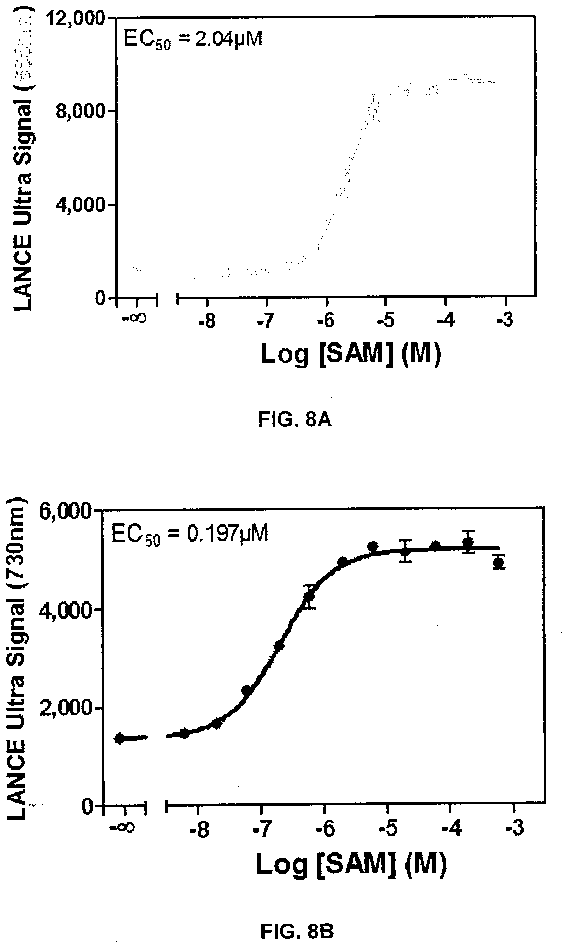

Both **FIGs. 8A** and **8B** show SAM titrations over a concentration range of 0 - 300µM. The enzyme concentrations used are as indicated in the multiplex single-enzyme titrations. 100 nM bio-H3 (1 - 21) was used.

### Example 5: Multiplex - Two-Enzyme, Cofactor Titration

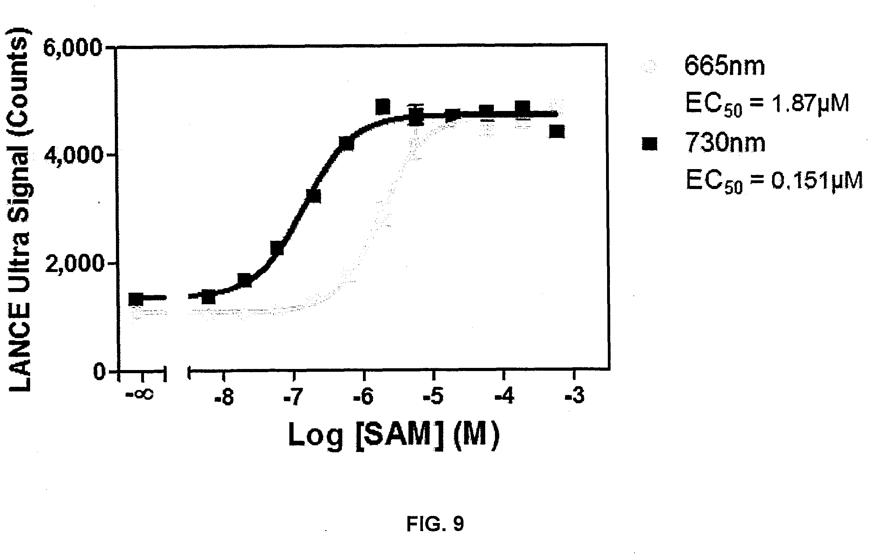

A SAM titration was performed under the same conditions indicated in the single enzyme cofactor titrations above except with both enzymes contained in the 2.5 µL aliquot. A SAM concentration of 10 µM was used for subsequent experiments (**FIG. 9**).

### Example 6: Multiplex - Single-Enzyme, Inhibitor Titration

The enzymatic portion of the inhibitor titration slightly differs from the standard enzymatic reaction and is listed as follows: 5 µL inhibitor, 2.5 µL enzyme, 15 minute incubation at room temperature and 2.5 µL substrate/cofactor mix. The detection step remains the same.

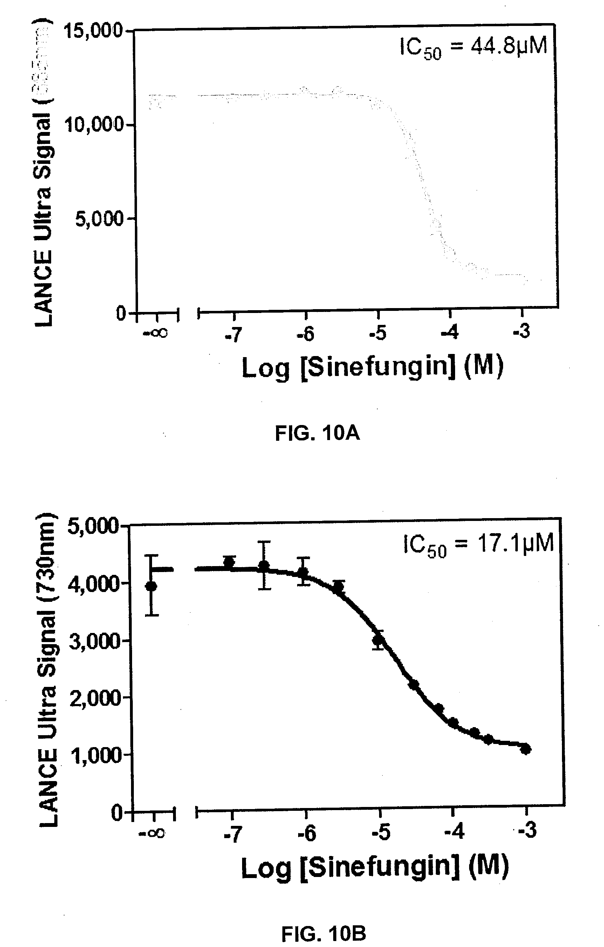

**FIGs. 10A** and **10B** show sinefungin titrations at a concentration range of 0 - 1 mM. 300 µM sinefungin was selected for the Z' experiment.

### Example 7: Multiplex - Two-Enzyme, Inhibitor Titration

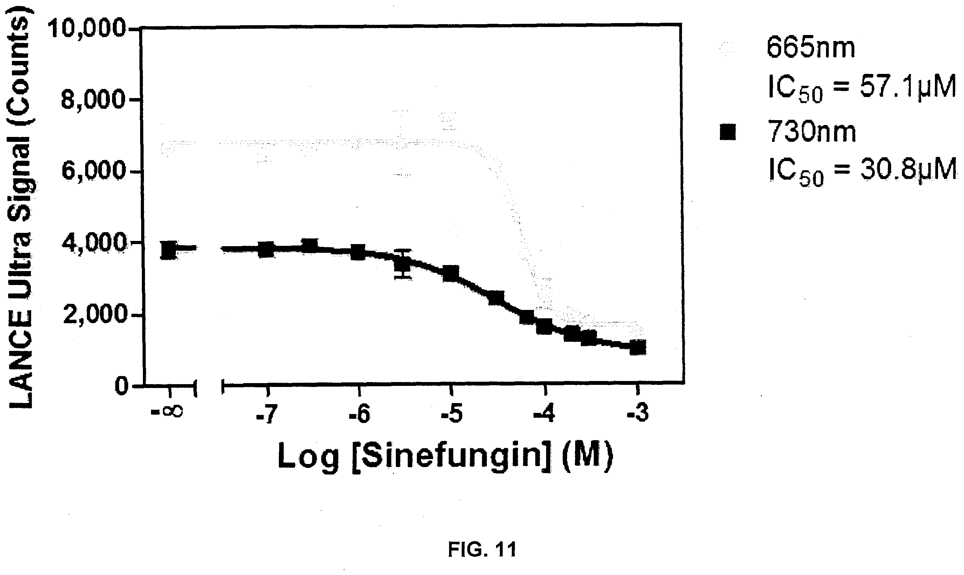

Shown in **FIG. 11** is a sinefungin titration. The conditions are similar to that which was mentioned in Example 5 above, with both enzymes contained in the 2.5 µL aliquot.

### Example 8: Multiplex - Two-Enzyme, Z' Determination

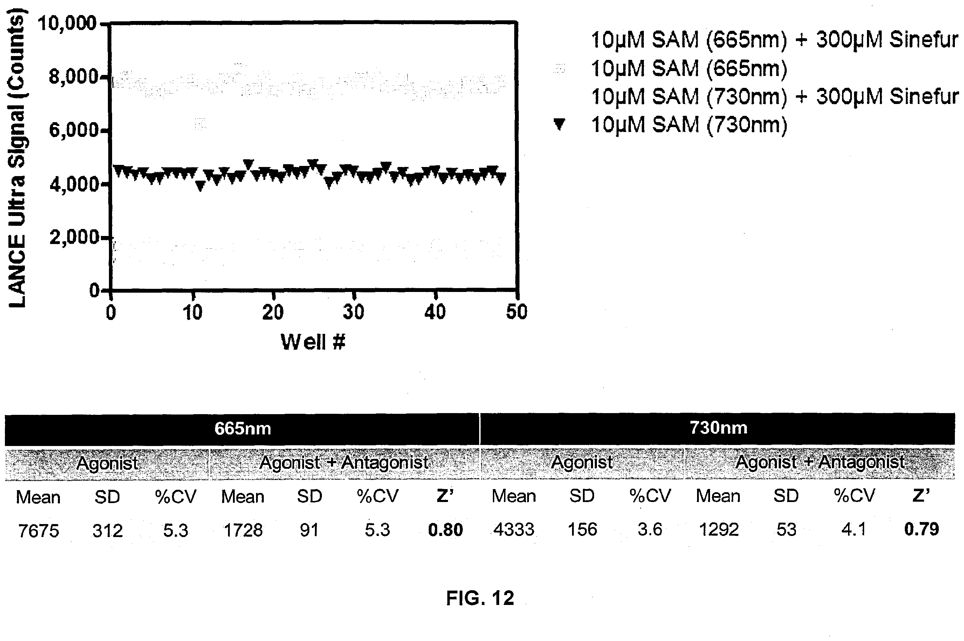

A novel, non-radioactive, low-bulk multiplexing assay has been developed for the TR-FRET LANCE® platform that allows for the measurement of two analytes (e.g., modifications) at once. With respect to epigenetics and post-transcriptional modifications, this assay can be used to show activator and inhibitor specificity. This assay demonstrates the ability to distinguish enzymes based on their biochemistry. With Z' values of 0.79 and 0.80 (**FIG. 12**), this assay is robust and suitable for high throughput screening.

### OTHER EMBODIMENTS

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. A time-resolved fluorescence energy resonance transfer TR-FRET method of determining the presence or absence, independently, of a first analyte and a second analyte on a single substrate in a sample; wherein the substrate is labeled with an affinity tag selected from the group consisting of biotin, digoxigenin, fluorescein, dinitrophenol, FLAG, HisTag, cmyc, HA, V5, and streptag; and
wherein the first analyte and second analyte each, independently, comprise a post-translational modification of a peptide selected from the group consisting of phosphorylation, methylation, acetylation, glycosylation, ubiquitination, and sumoylation,
the method comprising:
contacting the sample with a first analyte-specific binding partner bound to a first FRET acceptor capable of being excited by light with a wavelength of about 600 to 635 nm, a second analyte-specific binding partner bound to a second FRET acceptor capable of being excited by light with a wavelength of about 675 to 715 nm, and a compound comprising a europium chelate moiety that is capable of exciting the first FRET acceptor and the second FRET acceptor, wherein the compound comprising the europium chelate moiety comprises an affinity tag-specific binding partner that is specific for the affinity tag of the substrate;
exposing the sample to light in a wavelength range of about 315 to 350 nm; and
determining, independently, based on detecting an emission light of the sample, if the first analyte-specific binding partner and the second analyte-specific binding partner bind to the first analyte and second analyte, respectively, thereby detecting the presence or absence, independently, of the two analytes in the sample.

2. The method of claim 1, wherein the sample is exposed to light with a wavelength of about 320 to 340 nm.

3. The method of claim 1, wherein determining if the first analyte-specific binding partner binds to the first analyte comprises detecting an emission light with a wavelength of about 655 to 675 nm.

4. The method of claim 1, wherein determining if the second analyte-specific binding partner binds to the second analyte comprises detecting an emission light with a wavelength of about 715 to 740 nm.

5. The method of claim 1, wherein the sample comprises a purified molecule, a membrane, a tissue extract, blood, a cell lysate, a cell culture supernatant, cerebrospinal fluid, or urine.

6. The method of claim 1, wherein the affinity tag-specific binding partner is selected from the group consisting of streptavidin and streptactin when the affinity tag is biotin, and the group of streptag and an antibody for other affinity tags.

7. The method of claim 1, wherein at least one of the first analyte and second analyte is a methylation of the peptide sequence.

8. The method of claim 1, wherein the first and second analyte-specific binding partners independently comprise an analyte-specific binding molecule selected from the group consisting of a protein, a peptide, an antibody, an antigen-binding fragment, and an aptamer.

9. The method of claim 8, wherein the first analyte-specific binding partner and the second analyte-specific binding partner are each, independently, an antibody.

10. The method of claim 1, wherein the sample comprises serum or plasma.

## Patentansprüche

1. Zeitaufgelöstes Fluoreszenzenergieresonanztransfer- bzw. TR-FRET-Verfahren zum unabhängigen Bestimmen des Vorhandenseins oder Nichtvorhandenseins eines ersten Analyts und eines zweiten Analyts auf einem einzelnen Substrat in einer Probe; wobei das Substrat mit einer Affinitätsmarkierung gekennzeichnet ist, ausgewählt aus der Gruppe, bestehend aus Biotin, Digoxigenin, Fluorescein, Dinitrophenol, FLAG, HisTag, cmyc, HA, V5 und Streptag; und
wobei der erste Analyt und der zweite Analyt jeder unabhängig eine posttranslationale Modifikation eines Peptids umfassen, ausgewählt aus der Gruppe, bestehend aus Phosphorylierung, Methylierung, Acetylierung, Glycosylierung, Ubiquitinierung und Sumoylierung, das Verfahren umfassend:
Inkontaktbringen der Probe mit einem ersten analytspezifischen Bindungspartner, gebunden an einen ersten FRET-Akzeptor, der imstande ist, durch Licht mit einer Wellenlänge von etwa 600 bis 635 nm erregt zu werden, einem zweiten analytspezifischen Bindungspartner, gebunden an einen zweiten FRET-Akzeptor, der imstande ist, durch Licht mit einer Wellenlänge von etwa 675 bis 715 nm erregt zu werden, und einer Verbindung, umfassend einen Europiumchelatanteil, die imstande ist, den ersten FRET-Akzeptor und den zweiten FRET-Akzeptor zu erregen, wobei die den Europiumchelatanteil umfassende Verbindung einen affinitätsmarkierungsspezifischen Bindungspartner umfasst, der für die Affinitätsmarkierung des Substrats spezifisch ist;
Exponieren der Probe einem Licht in einem Wellenlängenbereich von etwa 315 bis 350 nm; und
Bestimmen, unabhängig, basierend auf Detektieren eines Emissionslichts der Probe, ob der erste analytspezifische Bindungspartner und der zweite analytspezifische Bindungspartner an den ersten Analyt bzw. den zweiten Analyt binden, wodurch unabhängig das Vorhandensein oder Nichtvorhandensein der zwei Analyte in der Probe detektiert wird.

2. Verfahren nach Anspruch 1, wobei die Probe dem Licht mit einer Wellenlänge von etwa 320 bis 340 nm exponiert wird.

3. Verfahren nach Anspruch 1, wobei Bestimmen, ob der erste analytspezifische Bindungspartner an den ersten Analyt bindet, umfasst, ein Emissionslicht mit einer Wellenlänge von etwa 655 bis 675 nm zu detektieren.

4. Verfahren nach Anspruch 1, wobei Bestimmen, ob der zweite analytspezifische Bindungspartner an den zweiten Analyt bindet, umfasst, ein Emissionslicht mit einer Wellenlänge von etwa 715 bis 740 nm zu detektieren.

5. Verfahren nach Anspruch 1, wobei die Probe ein gereinigtes Molekül, eine Membran, einen Gewebeextrakt, Blut, ein Zelllysat, einen Zellkulturüberstand, Zerebrospinalflüssigkeit oder Urin umfasst.

6. Verfahren nach Anspruch 1, wobei der affinitätsmarkierungsspezifische Bindungspartner aus der Gruppe ausgewählt ist, bestehend aus Streptavidin und Streptactin, wenn die Affinitätsmarkierung Biotin ist, und der Gruppe von Streptag und einem Antikörper für andere Affinitätsmarkierungen.

7. Verfahren nach Anspruch 1, wobei mindestens einer des ersten Analyts und des zweiten Analyts eine Methylierung der Peptidsequenz ist.

8. Verfahren nach Anspruch 1, wobei der erste und der zweite analytspezifische Bindungspartner unabhängig ein analytspezifisches Bindungsmolekül umfassen, ausgewählt aus der Gruppe, bestehend aus einem Protein, einem Peptid, einem Antikörper, einem Antigenbindungsfragment und einem Aptamer.

9. Verfahren nach Anspruch 8, wobei der erste analytspezifische Bindungspartner und der zweite analytspezifische Bindungspartner jeder unabhängig ein Antikörper sind.

10. Verfahren nach Anspruch 1, wobei die Probe Serum oder Plasma umfasst.

## Revendications

1. Procédé de transfert par résonance d'énergie de fluorescence à résolution temporelle TR-FRET pour déterminer la présence ou l'absence, de manière indépendante, d'un premier analyte et d'un second analyte sur un unique substrat dans un échantillon ; dans lequel le substrat est étiqueté à l'aide d'une étiquette d'affinité qui est sélectionnée parmi le groupe qui est constitué par la biotine, la digoxigénine, la fluorescéine, le dinitrophénol, l'étiquette FLAG, l'étiquette HisTag, la cmyc, la HA, la V5 et l'étiquette streptag ; et
dans lequel le premier analyte et le second analyte comprennent chacun, de manière indépendante, une modification post-translationnelle d'un peptide qui est sélectionnée parmi le groupe qui est constitué par la phosphorylation, la méthylation, l'acétylation, la glycosylation, l'ubiquitination et la sumoylation, le procédé comprenant :
la mise en contact de l'échantillon avec un premier partenaire de liaison spécifique de l'analyte qui est lié à un premier accepteur de FRET qui peut être excité par une lumière qui présente une longueur d'onde d'environ 600 à 635 nm, avec un second partenaire de liaison spécifique de l'analyte qui est lié à un second accepteur de FRET qui peut être excité par une lumière qui présente une longueur d'onde d'environ 675 à 715 nm et avec un composé qui comprend une moitié chélate d'europium qui permet d'exciter le premier accepteur de FRET et le second accepteur de FRET, dans lequel le composé qui comprend la moitié chélate d'europium comprend un partenaire de liaison spécifique de l'étiquette d'affinité qui est spécifique pour l'étiquette d'affinité du substrat ;
l'exposition de l'échantillon à une lumière dans une plage de longueurs d'onde qui va d'environ 315 nm à environ 350 nm ; et
la détermination, de manière indépendante, sur la base de la détection d'une lumière d'émission de l'échantillon, de si le premier partenaire de liaison spécifique de l'analyte et le second partenaire de liaison spécifique de l'analyte sont respectivement liés sur le premier analyte et sur le second analyte, d'où ainsi la détection de la présence ou de l'absence, de manière indépendante, des deux analytes dans l'échantillon.

2. Procédé selon la revendication 1, dans lequel l'échantillon est exposé à une lumière qui présente une longueur d'onde d'environ 320 à 340 nm.

3. Procédé selon la revendication 1, dans lequel la détermination de si le premier partenaire de liaison spécifique de l'analyte est lié au premier analyte comprend la détection d'une lumière d'émission qui présente une longueur d'onde d'environ 655 à 675 nm.

4. Procédé selon la revendication 1, dans lequel la détermination de si le second partenaire de liaison spécifique de l'analyte est lié au second analyte comprend la détection d'une lumière d'émission qui présente une longueur d'onde d'environ 715 à 740 nm.

5. Procédé selon la revendication 1, dans lequel l'échantillon comprend une molécule purifiée, une membrane, un extrait de tissu, du sang, un lysat de cellule, un surnageant de culture cellulaire, du fluide cérébrospinal ou de l'urine.

6. Procédé selon la revendication 1, dans lequel le partenaire de liaison spécifique de l'étiquette d'affinité est sélectionné parmi le groupe qui est constitué par la streptavidine et la streptactine lorsque l'étiquette d'affinité est la biotine, et le groupe qui est constitué par l'étiquette streptag et un anticorps pour d'autres étiquettes d'affinité.

7. Procédé selon la revendication 1, dans lequel au moins un analyte parmi le premier analyte et le second analyte est une méthylation de la séquence de peptide.

8. Procédé selon la revendication 1, dans lequel les premier et second partenaires de liaison spécifiques de l'analyte comprennent de manière indépendante une molécule de liaison spécifique de l'analyte qui est sélectionnée parmi le groupe qui est constitué par une protéine, un peptide, un anticorps, un fragment de liaison d'antigène et un aptamère.

9. Procédé selon la revendication 8, dans lequel le premier partenaire de liaison spécifique de l'analyte et le second partenaire de liaison spécifique de l'analyte sont chacun, de manière indépendante, un anticorps.

10. Procédé selon la revendication 1, dans lequel l'échantillon comprend du sérum ou du plasma.
